# FASCICULE DE BREVET EUROPEEN

(11) **EP 3 839 401 B1**
(45) Date de publication et mention de la délivrance du brevet: **12.07.2023**
(21) Numéro de dépôt: 20215022.3
(22) Date de dépôt: 17.12.2020
(51) Int. Cl.: F28D 20/00

(54) **SYSTÈME DESTINÉ AU MOINS AU DÉSTOCKAGE D'ÉNERGIE SOUS FORME THERMOCHIMIQUE**
SYSTEM, DAS MINDESTENS FÜR DIE ENTFERNUNG VON ENERGIE IN THERMOCHEMISCHER FORM VORGESEHEN IST
SYSTEM INTENDED AT LEAST FOR THE REMOVAL OF ENERGY IN THERMOCHEMICAL FORM

(30) Priorité: 20.12.2019 FR 1915349
(43) Date de publication de la demande: 23.06.2021
(73) Titulaire: COMMISSARIAT À L'ÉNERGIE ATOMIQUE ET AUX ÉNERGIES ALTERNATIVES, 75015 Paris (FR)
(72) Inventeur: ROUGE, Sylvie, 38054 GRENOBLE CEDEX 09 (FR); SORIANO, Olivier, 38054 GRENOBLE CEDEX 09 (FR)
(74) Mandataire: Hautier IP

(56) Documents cités:
- EP-A2- 2 808 640
- EP-B1- 2 808 640
- JP-A- H0 293 294
- US-A1- 2011 226 447
- PAN ZHIHAO ET AL: "Dehydration/hydration of MgO/H2O chemical thermal storage system", ENERGY, ELSEVIER, AMSTERDAM, NL, vol. 82, 16 février 2015 (2015-02-16), pages 611-618, XP029202872, ISSN: 0360-5442, DOI: 10.1016/J.ENERGY.2015.01.070

## Description

### DOMAINE TECHNIQUE

La présente invention concerne le domaine des énergies renouvelables et leur stockage. Elle trouve pour application particulièrement avantageuse le domaine du stockage thermochimique pour l'habitat ou les réseaux de chaleur.

### ETAT DE LA TECHNIQUE

Actuellement, le photovoltaïque (PV) pour l'habitat se développe assez lentement et les puissances installées sont faibles (3 kW), car il n'est pas intéressant pour les gestionnaires de réseau de proposer des capacités supérieures. En effet, la production PV est maximale et largement excédentaire en été quand la production électrique traditionnelle est également en surcapacité, et faible en hiver quand le réseau est surchargé. Une solution pour l'habitat dans des réseaux de chaleur ou pour des quartiers d'habitats individuels serait donc de stocker la production PV excédentaire en été et de l'utiliser en hiver pour le chauffage et l'eau sanitaire. Des problèmes similaires se retrouvent pour l'énergie éolienne.

On connait le stockage d'énergie thermique sous forme thermochimique. Le stockage sous forme thermochimique est connu pour stocker l'énergie thermique produite par le solaire thermique. Toutefois, cette solution de stockage pose des problèmes. Dans le cadre de l'habitat, le niveau de température de l'énergie thermique produite est relativement faible ce qui nécessite d'utiliser des réactions thermochimiques à basses températures redistribuant lors du déstockage de faibles températures difficilement applicables dans de nombreux cas ou nécessitant des débits d'air très important. De plus, ces réactions thermochimiques à basses températures sont des réactions d'hydratation/déshydratation qui utilisent la vapeur d'eau de l'air ambiant. Cette dépendance à l'humidité ambiante limite les réactions et leurs contrôles.

Les documents US 2011/226447 A1, JP H02 93294 A et EP 2 808 640 A2 montrent de tels systèmes destinés au moins au déstockage d'énergie sous forme thermochimique, sans pour autant permettre un usage d'énergie renouvelable satisfaisant.

Un objet de la présente invention est donc de proposer une solution pour stocker en vue d'un déstockage de l'énergie électrique notamment issue des énergies renouvelables qui puisse être stable et applicable aisément à l'habitat ou aux réseaux de chaleur.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un système destiné au moins au déstockage d'énergie sous forme thermochimique sur la base d'une réaction réversible d'un premier réactif A et d'un deuxième réactif B pour donner un produit C et de la chaleur et comprenant : - un réacteur d'hydratation configuré pour assurer la tenue d'une réaction exothermique du premier réactif A avec le deuxième réactif B pour produire le produit C et de la chaleur comprenant une phase de démarrage et une phase de maintien, - un module de circulation d'un fluide caloporteur dans le réacteur d'hydratation, - un module de stockage configuré pour recevoir le premier réactif A, - un module de stockage configuré pour recevoir le produit C, le système comprend: un module de production du deuxième réactif B en phase de maintien de la réaction exothermique, le deuxième réactif étant de la vapeur d'eau, comprenant un évaporateur et une source chaude, destiné à l'évaporation de l'eau par transfert thermique depuis la chaleur produite par la réaction exothermique au profit de la production de vapeur d'eau, la source chaude étant au moins partiellement le fluide caloporteur permettant d'extraire l'énergie thermique du réacteur d'hydratation, avantageusement, le circuit de circulation du fluide caloporteur étant configuré pour assurer le transfert thermique entre le réacteur d'hydratation (3) et l'évaporateur (12).

Le fait de produire la vapeur d'eau permet de contrôler la quantité du réactif B lors de la réaction exothermique et donc de contrôler la puissance thermique de la réaction.

De plus, les réactions thermochimiques d'hydratation présentant une telle enthalpie présentent également une température de l'énergie thermique produite lors de la réaction exothermique assurant un différentiel de température important avec une source à chauffer. Ce différentiel de température permet ainsi d'avoir un débit réduit du fluide caloporteur. Préférentiellement, la température de la réaction exothermique est au moins égale à 100° et la température cible de la source à chauffer est généralement d'une température maximale de 30°C à 60°C.

Avantageusement, l'enthalpie de réaction est supérieure à 70kj/mol. Cette enthalpie minimale permet de prévoir dans la présente invention avantageusement une étape de production d'un réactif B, de manière préférée la production de vapeur d'eau tout en conservant un bilan énergétique positif.

Avantageusement, le système est destiné également au stockage d'énergie électrique issue d'énergie renouvelable sous forme thermochimique comprenant un réacteur de déshydratation configuré pour assurer la tenue d'une réaction endothermique du produit C pour produire les réactifs A et B.

Préférentiellement, le système comprend un module de production de chaleur, destiné au chauffage du produit C, par transformation d'énergie électrique issue d'énergie renouvelable en énergie thermique.

Ainsi, le déphasage entre énergie électrique et énergie thermique permet d'utiliser des réactions ayant une enthalpie de réaction supérieure à celles des réactions classiquement utilisées pour le stockage d'énergie thermique dans l'habitat ou les réseaux de chaleur. Ces réactions sont des réactions présentant avantageusement une température de réaction supérieure à celles utilisées dans l'habitat. Avantageusement, les réactions selon l'invention présentent des températures supérieures ou égales à 100°C.

Un autre aspect concerne un procédé de stockage et de déstockage d'énergie thermique par un système tel que décrit ci-dessus comprenant une étape de déstockage d'énergie thermique comprenant une réaction exothermique d'hydratation comprenant la mise en contact d'un réactif A avec un réactif B, dans un réacteur d'hydratation pour la production d'un produit C et de chaleur, et une étape de production du réactif B étant de la vapeur d'eau produite par chauffage d'eau dans un évaporateur par récupération d'une partie de la chaleur produite par la réaction exothermique, l'enthalpie de la réaction exothermique étant supérieure à 70kJ/mol.

Un autre aspect concerne un procédé destiné au moins au déstockage d'énergie sous forme thermochimique par un système tel que décrit ci-dessus comprenant une étape de déstockage d'énergie thermique comprenant une réaction exothermique d'hydratation comprenant la mise en contact d'un réactif A avec un réactif B, dans un réacteur d'hydratation pour la production d'un produit C et de chaleur, comprenant une phase de démarrage et une phase de maintien caractérisé en ce qu'il comprend au cours de la phase de maintien, une étape de production du réactif B étant de la vapeur d'eau produite par chauffage d'eau dans un évaporateur par récupération d'une partie de la chaleur produite par la réaction exothermique, l'enthalpie de la réaction exothermique étant supérieure à 70kJ/mol.

Un autre aspect concerne un procédé de stockage et de déstockage d'énergie thermique par un système tel que décrit ci-dessus comprenant une étape de stockage d'énergie thermique comprenant une réaction endothermique comprenant le chauffage du produit C par un module de production de chaleur par transformation d'énergie électrique renouvelable en énergie thermique, l'enthalpie de la réaction endothermique étant supérieure à 70kJ/mol.

Un autre aspect concerne un procédé destiné également au stockage et de déstockage d'énergie thermique par un système tel que décrit ci-dessus comprenant une étape de stockage d'énergie thermique comprenant une réaction endothermique comprenant le chauffage du produit C par un module de production de chaleur par transformation d'énergie électrique renouvelable en énergie thermique, l'enthalpie de la réaction endothermique étant supérieure à 70kJ/mol.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un schéma d'un système de stockage et déstockage selon un premier mode de réalisation à lit fixe pour la déshydratation.
La figure 2 représente un schéma d'un système de stockage et déstockage selon le premier mode de réalisation à lit fixe pour l'hydratation.
La figure 3 représente un schéma d'un système de stockage et déstockage selon un deuxième mode de réalisation à lit mobile.
La figure 4 représente un schéma d'un réacteur selon le deuxième mode de réalisation à lit mobile illustré à la figure 3 pour la déshydratation.
La figure 5 représente un schéma d'un réacteur selon le deuxième mode de réalisation à lit mobile illustré à la figure 3 pour l'hydratation.
La figure 6 représente un schéma d'un système de stockage et déstockage selon un troisième mode de réalisation à lit fluidisé avec préchauffage en entrée des réacteurs.
La figure 7 représente un schéma d'un système de stockage et déstockage selon le troisième mode de réalisation à lit fluidisé avec stockage en température.
La figure 8 représente un schéma d'un système de stockage et déstockage selon le troisième mode de réalisation à lit fluidisé avec stockage en température illustré à la figure 7 pour la déshydratation.
La figure 9 représente un schéma d'un système de stockage et déstockage selon le troisième mode de réalisation à lit fluidisé avec stockage en température illustré à la figure 7 pour l'hydratation.

Les dessins sont donnés à titre d'exemple et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le système est également destiné au stockage d'énergie électrique issue d'énergie renouvelable sous forme thermochimique comprend un réacteur de déshydratation configuré pour assurer la tenue d'une réaction endothermique du produit C pour produire les réactifs A et B.

Selon un exemple, le système comprend un module de production de chaleur 6, destiné au chauffage du produit C, par transformation d'énergie électrique issue d'énergie renouvelable en énergie thermique.

Selon un exemple, le réacteur de déshydratation 3 est délocalisé par rapport au réacteur d'hydratation 4.

Selon un exemple, le système comprend un module de transport 7 du premier réactif A entre le module de stockage 1 du premier réactif A et le réacteur d'hydratation et un module de transport du produit C entre le réacteur d'hydratation et le module de stockage du produit C, le réacteur étant un lit fluidisé ou mobile.

Selon un exemple, le système comprend un module de transport du premier réactif A entre le réacteur de déshydratation et le module de stockage du premier réactif A.

Selon un exemple, le système comprend un module d'évacuation du deuxième réactif B, préférentiellement le module d'évacuation est agencé sur le module de circulation du fluide caloporteur. Le module d'évacuation est une sortie du réacteur de déshydratation pouvant être à l'air libre ou non appelé couramment cheminée.

Selon un exemple, le système comprend un module d'apport d'eau ou de vapeur d'eau en phase de démarrage de la réaction exothermique.

Selon un exemple, le réacteur d'hydratation 4, le module de stockage 1 du premier réactif A et le module de stockage 2 du produit C sont communs, le réacteur étant un réacteur fixe.

Selon un exemple, la chaleur produite par la réaction exothermique est utilisée pour chauffer par échange thermique dans un module de récupération de chaleur une source finale avantageusement pour un réseau de chaleur tel que par exemple le chauffage ou la production d'eau chaude sanitaire ou pour l'habitat. On entend pour l'habitat que l'énergie thermique est utilisée à l'échelle d'un bâtiment. A titre préféré, la température de la source finale est inférieure ou égale à 60°C.

Selon un exemple, l'étape de stockage du procédé est délocalisée.

Selon un exemple, le réactif A est choisi parmi l'oxyde de calcium (CaO), l'oxyde de magnésium (MgO) ou le dibromure de calcium (CaBr2).

Selon un exemple, l'enthalpie de réaction est supérieure de 50% à l'enthalpie de vaporisation de l'eau, préférentiellement l'enthalpie de réaction est supérieure à 70kJ/mol.

Selon un exemple, la température de la réaction est supérieure ou égale à 100°C.

Selon un exemple, la température de la réaction est inférieure ou égale à 500°C.

Selon un exemple, la température cible de la source finale est inférieure ou égale à 60°C.

Selon un exemple, la réaction thermochimique d'hydratation/déshydratation comprend un seul équilibre. Ainsi, les réactions d'hydratation et de déshydratation sont facilement contrôlables. En effet, certaines réactions ont plusieurs équilibres successifs qui sont complexes à gérer.

On entend par "stockage thermochimique" le stockage de chaleur faisant intervenir des réactions chimiques endothermiques et exothermiques réversibles.

L'amont et l'aval en un point donné sont pris en référence au sens de circulation du fluide dans le circuit.

Un réseau de chaleur est une installation distribuant à plusieurs utilisateurs, c'est-à-dire plusieurs bâtiments, de la chaleur via un ensemble de canalisations de transport de chaleur. La chaleur est principalement utilisée pour le chauffage des bâtiments et de l'eau chaude sanitaire ; certains réseaux fournissent également de la chaleur à usage industriel.

L'invention concerne un stockage thermochimique dont la réaction réversible peut s'écrire

A + B ↔ C + Q

La réaction thermochimique réversible assure la réaction entre le réactif A et le réactif B pour produire le produit C et de la chaleur Q et inversement. Il est indispensable que ce type de réaction soit complètement réversible.

Selon l'invention, le stockage thermochimique est assuré par une réaction d'hydratation /déshydratation. De cette manière, le réactif B est de la vapeur d'eau c'est-à-dire de l'eau à l'état gazeux.

La phase de décomposition-dissociation de C est endothermique, elle nécessite une quantité de chaleur (Q) et cette étape est appelée étape de stockage ou de charge ou encore de régénération ou de déshydratation. Cette réaction endothermique est une étape de stockage de la chaleur thermique. Préférentiellement, la chaleur est produite par une transformation d'énergie électrique issue d'une énergie renouvelable. À titre d'exemple préféré, des panneaux photovoltaïques ou bien des éoliennes produisent de l'électricité qui sert à alimenter un module de production de chaleur tel qu'une résistance. L'avantage de l'invention à utiliser de l'électricité pour produire de la chaleur est de permettre une température plus élevée de la chaleur produite. En effet, l'utilisation de chaleur solaire dans de petites applications types habitation ou bien de chaleur fatale implique des températures basses, généralement inférieures à 100°C, limitant les réactions thermochimiques pouvant être mises en oeuvre à ses températures. Lors de la production de chaleur à partir d'une source d'énergie électrique, la température de la chaleur peut être supérieure à 100°C et peut être contrôlée ce qui permet de choisir d'autres types de réactions thermochimiques.

La phase de formation-restitution de A+B est exothermique, elle dégage une quantité de chaleur (Q) et elle est intitulée phase de déstockage ou décharge ou bien restitution ou d'hydratation. Cette étape exothermique permet de déstocker l'énergie thermique stockée. Selon un mode de réalisation préféré de l'invention, l'énergie thermique déstockée est valorisée sous forme d'énergie thermique. C'est-à-dire que l'énergie thermique produite est utilisée sous forme d'énergie thermique et n'est par exemple pas transformée en énergie électrique. À titre d'exemple préféré, l'énergie thermique est utilisée pour l'habitat ou pour des réseaux de chaleur pour des applications de chauffage ou d'eau chaude sanitaire.

Les réactifs A et B peuvent être stockés séparément et, tant qu'ils ne sont pas mis en contact, aucune réaction ne peut avoir lieu. L'énergie est donc stockée « indéfiniment » avec des pertes négligeables puisque l'énergie est stockée sous forme chimique. Ceci est un des avantages majeurs de cette méthode de stockage.

Selon l'invention le stockage thermochimique se base sur la réaction du couple réactif A/produit C choisi parmi MgO/Mg(OH), ou CaBr2/CaBr2.H2O et préférentiellement CaO/Ca(OH)2. Le couple choisi est appelé également matériau de stockage.

Selon des possibilités de l'invention, les réactions sélectionnées sont CaO+ H2O→ Ca(OH)2 + 104 kJ/mol ou MgO+H2O→ Mg(OH)2+81 kJ/mol ou CaBr2+H2O→ CaBr2.H2O + 71 kJ/mol puis CaBr2.H2O+H2O→ CaBr2.2H2O + 63 kJ/mol.

Une des réactions réversibles envisagée permettant un tel stockage est la réaction d'hydratation/déshydratation du couple CaO/Ca(OH)2, sous forme solide, selon l'équation de réaction suivante :

Ca(OH)2 + Hr <--> CaO + H20 ,

Hr étant l'enthalpie de la réaction.

La suite de la description est faite en référence à cette réaction sans pour autant être limitante.

Lors de la phase de charge, l'énergie thermique issue, par exemple de la transformation d'énergie électrique produite par énergie renouvelable, permet de déshydrater l'hydroxyde de calcium pour former de l'oxyde de calcium et de l'eau. L'hydroxyde de calcium et l'oxyde de calcium sont stockés pendant une durée indéterminée éventuellement à température ambiante. Ensuite, pour restituer l'énergie thermique emmagasinée, CaO et H20, de préférence à l'état gazeux c'est à dire sous forme de vapeur d'eau, sont mélangés et réagissent pour libérer la chaleur de réaction et régénérer l'hydroxyde de calcium. Cette énergie thermique est par exemple transmise à un réseau de chauffage ou d'eau chaude sanitaire. Plus précisément, seuls l'hydroxyde de calcium et l'oxyde de calcium sont stockés, l'eau n'est pas stockée, mais prélevée sur les réseaux d'eau et la vapeur d'eau est évacuée.

Le procédé selon l'invention comprend une étape de déstockage d'énergie thermique. L'étape de déstockage d'énergie thermique comprend une réaction exothermique d'hydratation comprenant la mise en contact d'un réactif A avec un réactif B pour la production d'un produit C et de chaleur, préférentiellement dans un réacteur d'hydratation 4. L'étape de déstockage comprend une phase de démarrage de la réaction et une phase de maintien de la réaction. Selon l'invention, le procédé comprend une étape de production du réactif B, c'est à dire de production de vapeur d'eau par chauffage d'eau par récupération de la chaleur produite lors de la réaction exothermique. Avantageusement, le procédé comprend une étape de chauffage d'eau destinée à la production du réactif B, de la vapeur d'eau. Avantageusement, au moins au cours de la phase de maintien de la réaction, le réactif B est produit grâce à la réaction exothermique de déstockage. Préférentiellement, l'étape de production par chauffage se produit au sein d'un évaporateur 12 Un évaporateur 12 est considéré comme un échangeur thermique assurant le transfert d'énergie thermique entre une source chaude et l'eau à vaporiser. Avantageusement, au moins au cours de la phase de maintien de la réaction, la source chaude est issue de la réaction exothermique et en particulier est un fluide caloporteur. Le fluide caloporteur récupère l'énergie thermique produite lors de la réaction exothermique permettant de chauffer l'eau pour produire le réactif B. En phase de maintien, l'énergie thermique produite sert en partie à la production du réactif B et donc à la réaction d'hydratation elle-même.

Selon un mode de réalisation, au moins au cours de la phase de maintien de la réaction, le chauffage de l'eau est réalisé par récupération d'une partie de la chaleur produite par la réaction exothermique. La réaction d'hydratation selon l'invention est choisie de sorte que l'enthalpie de la réaction exothermique est supérieure à 70kJ/mol. La mise en contact du réactif A avec le réactif B produit de la chaleur utilisée partiellement pour produire le réactif B. Pour permettre de conserver une partie de la chaleur produite par la réaction exothermique pour son utilisation, préférentiellement pour le chauffage ou pour l'eau chaude sanitaire d'habitation ou pour des réseaux de chaleur, l'enthalpie de la réaction exothermique doit être supérieure à l'enthalpie de la réaction de vaporisation du réactif B c'est-à-dire de l'eau. Préférentiellement, cette différence doit être supérieure d'au moins 50%. À 1 bar pour élever 1 kg d'eau de 10°C à la vapeur saturante, l'enthalpie est de 2634 kJ/kg soit 47.4 kJ/mol. L'enthalpie de réaction exprimée en kJ/mol d'H2O doit donc être supérieure à 70 kJ/mol.

Selon un mode de réalisation, la chaleur produite par la réaction exothermique est transférée par un fluide caloporteur jusqu'à un échangeur thermique assurant le transfert thermique vers une source à chauffer. La source à chauffer est par exemple une source finale. La source finale étant le fluide de chauffage ou l'eau chaude sanitaire à destination d'une habitation ou d'un réseau de chaleur.

Selon un mode de réalisation, l'initiation de la réaction d'hydratation demande un apport d'eau pouvant être à l'état liquide ou vapeur.

Selon une première possibilité, au cours de la phase de démarrage de la réaction, l'eau est liquide est ajoutée, préférentiellement pulvérisée par un pulvérisateur dans le réacteur d'hydratation 3, au réactif A. La réaction entre le réactif A et le réactif B, préférentiellement pulvérisé à l'état liquide démarre la réaction qui produit alors le produit C et de la chaleur qui peut être immédiatement utilisée pour chauffer l'eau en vue de la production du réactif B.

Selon une deuxième possibilité, au cours de la phase de démarrage de la réaction, de l'eau est chauffée par un chauffage de type générateur de vapeur pour assurer la production du réactif B avant sa mise en contact avec le réactif A.

Selon une possibilité, une quantité d'eau utile au démarrage de la réaction est stockée à l'état surchauffé, lors du démarrage de la réaction d'hydratation, l'eau est vaporisée par ouverture d'une vanne d'accès au réacteur d'hydratation, le réactif B entre en contact avec le réactif A ce qui initie la réaction. Ensuite la chaleur produite est directement utilisée pour la production du réactif B.

Avantageusement, la durée de la phase de démarrage est négligeable face à la durée de la phase de maintien de la réaction.

Selon l'invention, le procédé de stockage et de déstockage d'énergie thermique comprend une étape de stockage d'énergie thermique. L'étape de stockage d'énergie thermique comprend une réaction endothermique de déshydratation. L'enthalpie de la réaction endothermique étant supérieure à 70kJ/mol. Cette étape de stockage comprend une étape de chauffage du produit C par un module de production de chaleur 6, préférentiellement par transformation d'énergie électrique renouvelable en énergie thermique. Le chauffage permet la déshydratation du produit C pour fournir le réactif A et le réactif B. De l'énergie électrique alimente un module de production de chaleur 6, tel qu'une résistance électrique, configuré pour chauffer directement ou indirectement le produit C. Selon une possibilité, le module de production de chaleur 6 assure le chauffage par chauffe électrique du réacteur 4 et/ou du module de stockage 2 contenant le produit C. Selon une autre possibilité, le module de production de chaleur 6 assure le chauffage du produit C par chauffage d'un fluide caloporteur en contact du produit C.

Selon le procédé de l'invention, la température de chauffage du module de production de chaleur 6 n'est pas limitée par la source en énergie du module. En effet, en produisant de la chaleur à partir d'énergie électrique, la température produite par le module de production de chaleur 6 ne dépend pas de l'énergie électrique, mais éventuellement uniquement du module en lui-même, contrairement à l'utilisation de chaleur issue de l'énergie solaire thermique pour le chauffage du produit C qui limite la température du chauffage à 90°C maximum. Des réactions endothermiques à plus hautes températures peuvent ainsi être utilisées dans le présent procédé. Cela permet d'élargir l'application de l'invention.

Des réactions endothermiques à haute température peuvent être utilisées. On entend par haute température une température égale ou supérieure à 100°C. À titre préféré, la température de la réaction endothermique est supérieure ou égale à 100°C. Le choix de réaction endothermique haute température permet également d'avoir une température de la chaleur produite lors de la réaction exothermique plus importante. Lorsque la réaction exothermique produit une chaleur à haute température, la différence de température entre la source à chauffer, par exemple la source finale, et le fluide caloporteur est importante et le débit du fluide caloporteur peut être faible. Cette différence facilite également le dimensionnement d'un échangeur thermique, dénommé ci-après récupérateur 15, entre le gaz caloporteur et la source à chauffer, par exemple la source finale.

Dans les applications selon l'invention, que ce soit pour l'habitat ou pour les réseaux de chaleur, le débit du fluide caloporteur peut être réduit, limitant les contraintes de volumes des circuits. Par exemple dans le cas d'un flux d'air, en réduisant le débit, le diamètre des canalisations d'amenée et de retour du flux d'air peut être réduit facilitant leurs intégrations.

Selon un mode de réalisation préféré, l'énergie électrique est issue d'énergie renouvelable telle que de l'énergie photovoltaïque ou bien de l'énergie éolienne.

Selon une possibilité, l'étape de stockage du procédé est délocalisée. On entend par là que l'étape de stockage et l'étape de déstockage ne se déroulent pas sur un même site. À titre d'exemple, le produit C est transporté, par exemple par camion, jusqu'à un site muni d'un réacteur de déshydratation 4 permettant la production du réactif A qui est alors retransporté, par exemple par camion, vers un autre site muni d'un réacteur d'hydratation 3. En effet, le stockage thermochimique offre la possibilité de stocker la chaleur et de la restituer en des lieux géographiques différents. Le transport des produits de stockage est possible en raison de la densité énergétique intéressante et de l'absence de pertes thermiques.

L'invention concerne un système de déstockage et avantageusement également de stockage d'énergie électrique sous forme thermochimique. Le système selon l'invention comprend un réacteur 3 configuré pour assurer la tenue d'une réaction exothermique du premier réactif A avec le deuxième réactif B pour la production du produit C et de chaleur. Le réacteur est également appelé réacteur d'hydratation 3.

Selon l'invention, le système comprend un module de stockage 1 du réactif A. Le module de stockage 1 est par exemple une cuve de stockage de type silo. À titre préféré, le module de stockage 1 est configuré pour recevoir un réactif A à l'état solide, notamment sous forme de poudre ou granulés. Le module de stockage 1 peut stocker le réactif A à température ambiante, par exemple 20 à 50°C, ou bien en température c'est-à-dire à la température de la réaction d'hydratation par exemple grâce à des moyens de chauffage agencés dans le réacteur 3.

Selon l'invention, le système comprend un module de stockage 2 du produit C. Le module de stockage 2 est par exemple une cuve de stockage de type silo. À titre préféré, le module de stockage 2 est configuré pour recevoir un produit C à l'état solide, notamment sous forme de poudre ou granulés. Le module de stockage 1 peut stocker le produit C à température ambiante, par exemple 20 à 50°C, ou bien en température c'est-à-dire à la température de la réaction déshydratation par exemple grâce à des moyens de chauffage agencés dans le réacteur 4.

Le système comprend un module de production du réactif B. Le module de production comprend avantageusement un évaporateur 12 et une source chaude. L'évaporateur 12 permet la vaporisation de l'eau pour produire le réactif B, la vapeur d'eau. L'évaporateur 12 permet la vaporisation par transfert d'énergie thermique entre une source chaude et l'eau à évaporer. La source chaude est avantageusement produite par la réaction exothermique préférentiellement au moins au cours de la phase de maintien de la réaction. La source chaude est avantageusement un fluide caloporteur permettant d'extraire l'énergie thermique du réacteur 3.

Préférentiellement, le système comprend un module de circulation d'un fluide caloporteur dans le réacteur 3. Le module de circulation du fluide caloporteur comprend un circuit de circulation de fluide 5 caloporteur. Le circuit de circulation du fluide caloporteur assure le transfert thermique entre le réacteur d'hydratation 3 et l'évaporateur 12. Avantageusement, le circuit de circulation de fluide 5 caloporteur assure la connexion fluidique entre le réacteur 3 et l'évaporateur 12. Préférentiellement, le réacteur 3 et l'évaporateur 12 sont agencés sur le circuit de circulation de fluide 5 pour permettre la récupération d'énergie thermique au niveau du réacteur 3 vers le fluide caloporteur et le transfert de l'énergie thermique du fluide caloporteur vers de l'eau dans l'évaporateur 12 en vue de la production du réactif B. Le module de circulation comprend préférentiellement au moins un ventilateur 14 agencé sur le circuit 5 de fluide caloporteur, lorsque le fluide caloporteur est un gaz ou une pompe lorsque le fluide caloporteur est un liquide. Le fluide caloporteur est destiné à circuler dans le réacteur d'hydratation 3 pour récupérer l'énergie thermique dégagée par la réaction exothermique. Le fluide caloporteur assure ainsi le transport de l'énergie thermique en dehors du réacteur 3. Le fluide caloporteur circule au moins pour une partie dans l'évaporateur 12. Le fluide caloporteur joue le rôle de source chaude transférant de l'énergie thermique à l'eau. Avantageusement, le fluide caloporteur issu de l'évaporateur 12 comprend encore de l'énergie thermique pouvant être transférée au profit d'un chauffage ou transférée au profit d'une habitation ou d'un réseau de chaleur préférentiellement par échange thermique dans un module de récupération ou récupérateur 15. Le récupérateur 15 est avantageusement un échangeur thermique assurant l'échange thermique entre le fluide caloporteur en sortie de l'évaporateur 12 et une source à chauffer, étant avantageusement une source finale, c'est-à-dire le fluide d'un réseau de chaleur, pour le chauffage ou pour la production d'eau chaude sanitaire ou directement d'une habitation.

Selon un mode de réalisation, le système comprend un module d'apport d'eau ou de vapeur d'eau en phase de démarrage de la réaction exothermique. Le module d'apport d'eau ou de vapeur d'eau comprend par exemple un pulvérisateur d'eau à l'état liquide dans le réacteur 3, ou encore un chauffage de type générateur de vapeur et un injecteur de vapeur dans le réacteur 3, ou encore un réservoir d'une faible quantité d'eau à l'état surchauffée connecté fluidiquement au réacteur 3, préférentiellement par une vanne de dépressurisation, assurant la production de vapeur en entrée de réacteur 3.

Le fluide caloporteur est par exemple un gaz tel que de l'air, ou un liquide tel que de l'eau surchauffée ou de l'huile.

Dans le mode de réalisation d'un réacteur à lit fluidisé, le système comprend un gaz de fluidisation. Le gaz de fluidisation transporte avantageusement le réactif B, c'est-à-dire la vapeur réactive apportée lors de la réaction endothermique ou extraire lors de la réaction exothermique. Le gaz de fluidisation peut être de l'air, de la vapeur d'eau ou un mélange air-vapeur d'eau.

Le système selon un mode de réalisation de l'invention comprend un réacteur 4 configuré pour assurer la tenue d'une réaction endothermique pour produire le réactif A et le réactif B à partir du produit C et d'énergie thermique. Le réacteur est également appelé réacteur de déshydratation 4 avantageusement, il est le siège de la réaction de déshydratation.

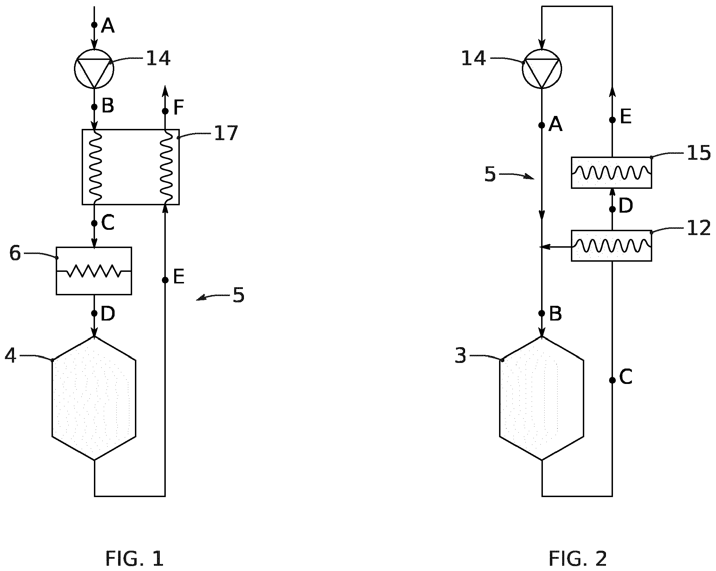

Selon une première variante de l'invention illustrée aux figures 1 et 2, le réacteur d'hydratation est confondu avec le module de stockage 1 du réactif A et avec le module de stockage 2 du produit C. Le réacteur d'hydratation 3 est un réacteur fixe. À titre préféré, le réacteur de déshydratation 4 est avantageusement confondu avec le réacteur d'hydratation 3. De cette manière, un seul réacteur 3, 4 est le siège de la réaction d'hydratation et de déshydratation ainsi que le stockage du réactif A et du produit C.

L'avantage d'un tel réacteur est de n'avoir aucune manipulation de solide. Le réactif solide est un lit fixe. Le gaz caloporteur traverse l'épaisseur du lit fixe et apporte ou extrait la chaleur.

Préférentiellement, le gaz caloporteur véhicule également la vapeur, le réactif B, consommée lors de l'hydratation ou produite par la déshydratation.

Le réacteur peut avoir plusieurs lits élémentaires ou lit fixe multicouches. Le volume de chaque couche doit inclure l'expansion volumique liée à l'hydratation. Les couches sont alimentées en gaz caloporteur séquentiellement.

Préférentiellement, la récupération de l'énergie thermique lors de la réaction exothermique ou la fourniture de l'énergie thermique lors de la réaction endothermique sont réalisées sur le module de circulation du gaz caloporteur. Le système comprend un module pour la production de chaleur 6 agencé sur le module de circulation du gaz caloporteur et plus préférentiellement sur le circuit de circulation 5 du gaz. L'apport de chaleur se fait donc par chauffage du gaz caloporteur en amont du réacteur 3,4. Le système comprend avantageusement un module de récupération 15 de l'énergie thermique agencé sur le module de circulation du gaz caloporteur et préférentiellement sur le circuit de circulation 5 du gaz caloporteur. Le module de récupération 15 de l'énergie thermique comprend préférentiellement un échangeur thermique dénommé récupérateur assurant l'échange thermique entre le gaz caloporteur issu du réacteur et une source à chauffer, par exemple une source finale, pouvant être un fluide d'un circuit primaire ou secondaire d'un réseau de chaleur ou une source de chaleur pour l'habitation directement pour le chauffage, ou la production d'eau chaude sanitaire. L'extraction de la chaleur produite est ainsi réalisée par le gaz caloporteur qui peut transférer cette énergie thermique par un échangeur. Avantageusement, le module de récupération 15 d'énergie thermique est externe au réacteur. Cela permet un échange thermique contrôlé simple permettant une maintenance facile. Le différentiel de température dans le récupérateur 15 est avantageusement important. En effet, le gaz caloporteur pénètre dans l'échangeur à une température supérieure ou égale à 100°C, en fonction de la réaction thermochimique sélectionnée. La source à chauffer est avantageusement un fluide d'une source finale. À titre d'exemple, la température cible de la source finale est inférieure ou égale à 60°C. Par exemple 30°C pour un plancher chauffant et 60°C pour un chauffage par radiateurs classiques.

Selon l'invention dans lequel la température de la réaction endothermique et avantageusement exothermique est importante, préférentiellement supérieure à 100°C, permet d'avoir un débit de gaz caloporteur dans le réacteur faible qui permet de multiplier les couches. À titre d'exemple, le débit est inférieur à 40 kg/h/kW soit 31,25 Nm³/h.

Dans une situation de fonctionnement intermittent, un inconvénient d'un réacteur de ce type est de devoir assurer le chauffage de tout le volume du réacteur et donc de tout le volume des modules de stockage.

Selon une autre variante de l'invention, le réacteur d'hydratation 3 et le réacteur de déshydratation 4 sont distincts des modules de stockage du réactif A et du produit C. Le réacteur 3 ou 4 n'est pas un lit fixe. Le réacteur 3 ou 4 est avantageusement un lit fluidisé ou un lit mobile.

Selon cette variante, le système comprend un module de transport 7 du réactif A agencé entre le module de stockage 1 et le réacteur d'hydratation 3 destiné au transport du réactif A depuis le module de stockage du réactif A vers le réacteur d'hydratation et un module de transport 8 du produit C agencé entre le module de stockage 8 et le réacteur d'hydratation 3 destiné au transport du produit C depuis le réacteur d'hydratation 3 vers le module de stockage 8 du produit C.

Le système comprend selon une possibilité, un réacteur de déshydratation 4 délocalisé. Le produit C est transporté sur un autre site pour subir une réaction endothermique de stockage d'énergie thermique avant d'être rapporté dans le module de stockage du produit C.

Selon une autre possibilité, le système comprend le réacteur de déshydratation 4 sur le même site que le réacteur d'hydratation.

Selon un mode de réalisation, le réacteur d'hydratation 3 et le réacteur de déshydratation 4 sont confondus. Le réacteur 3, 4 joue successivement le rôle de réacteur d'hydratation 3 et de réacteur de déshydratation 4. Le module de transport 7 du réactif A peut être également configuré comme module de transport 9 pour le transport du réactif A depuis le réacteur déshydratation 4 vers le module de stockage 1 du réactif A. De même, le module de transport 8 du produit C peut être également configuré comme module de transport 10 pour le transport du produit C depuis le module de stockage 2 du produit C vers le réacteur déshydratation 4.

Selon un mode de réalisation, le réacteur d'hydratation 3 et le réacteur de déshydratation 4 sont distincts. Le système comprend un module de transport 7 du réactif A agencé entre le module de stockage 1 et le réacteur d'hydratation 3 destiné au transport du réactif A depuis le module de stockage 1du réactif A vers le réacteur d'hydratation 3 et un module de transport 8 du produit C agencé entre le module de stockage 1 et le réacteur d'hydratation 3 destiné au transport du produit C depuis le réacteur d'hydratation vers le module de stockage du produit C, un module de transport 9 du réactif A agencé entre le module de stockage 1 et le réacteur de déshydratation 4 destiné au transport du réactif A depuis le réacteur de déshydratation 4 vers le module de stockage 1 du réactif A et un module de transport 10 du produit C agencé entre le module de stockage 2 et le réacteur de déshydratation 4 destiné au transport du produit C depuis le module de stockage 2 du produit C vers le réacteur de déshydratation 4.

Le lit mobile ou le lit fluidisé présentent l'avantage de pouvoir avoir de grands modules de stockage à température ambiante et de petits réacteurs en température.

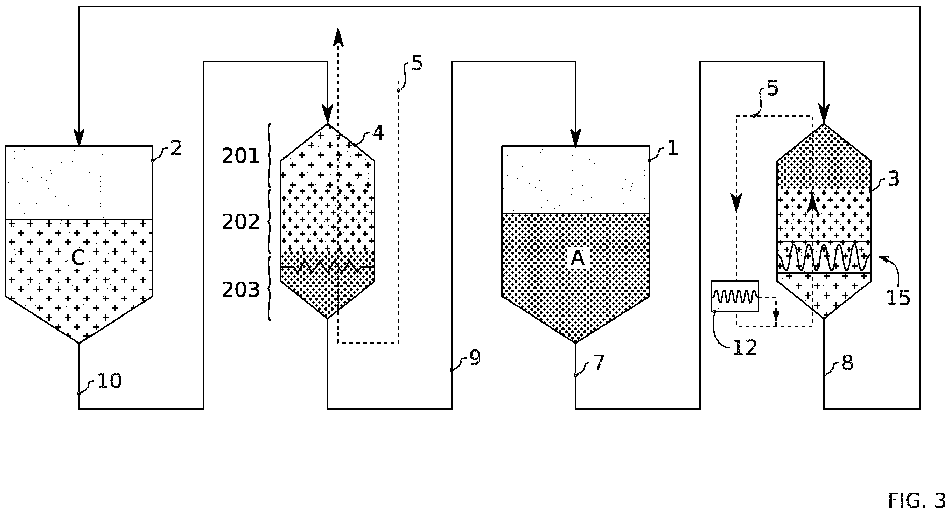

Selon un mode de réalisation illustré aux figures 3, 4 et 5 le réacteur d'hydratation 3 et le réacteur de déshydratation 4 sont un lit mobile plus précisément un lit tassé mobile à contre-courant.

Dans un lit tassé mobile de déshydratation, le produit C sous forme solide est alimenté par le haut et s'écoule lentement par gravité vers le bas. Le gaz caloporteur, par exemple de l'air, circule à contre-courant du solide du bas vers le haut. Ce principe permet de créer un gradient thermique dans le lit et de préchauffer l'air avec le solide, le produit C ou le réactif A, sortant puis de préchauffer le solide avec l'air sortant. Ce mode de réalisation favorise la récupération de chaleur sensible du solide, le produit C ou le réactif A. Le lit mobile peut être également une vis chauffante avec contre-courant d'air. Le réacteur comprend une vis chauffante avec contre-courant d'air. Cette forme facilite le design de la zone chauffante et assure un débit connu dans le lit, donné par la vitesse de rotation de la vis.

Dans ce mode de réalisation la coulabilité du solide, le produit C ou le réactif A, doit être optimale pour éviter les risques de blocage lors de l'hydratation en raison du gonflement du solide.

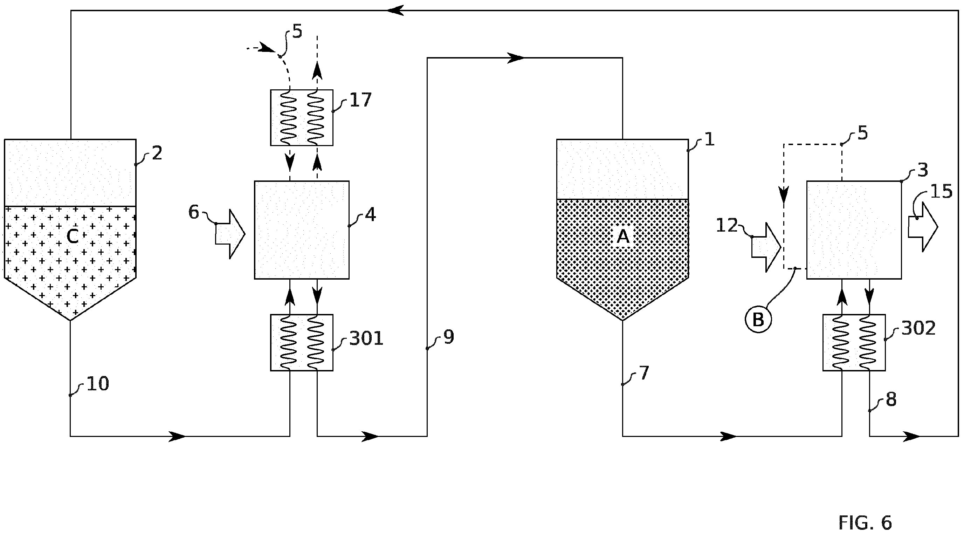

Selon un autre mode de réalisation illustré aux figures 6 à 7, le réacteur d'hydratation 3 et le réacteur de déshydratation 4 sont un lit fluidisé.

Dans ce mode de réalisation, l'échange de chaleur devient un problème simple tandis que la récupération de chaleur sensible est plus difficile. La difficulté de ce principe est d'assurer la préchauffe/refroidissement du solide.

L'intérêt d'un lit fluidisé est de permettre des puissances beaucoup plus élevées dans un petit volume, ce mode de réalisation est donc bien adapté à des puissances plus élevées qu'un lit mobile. Le gaz caloporteur, tel que l'air, circulant à plus grande vitesse, il peut transporter plus de réactif B c'est-à-dire vapeur réactive. Les échanges de chaleur sont facilités par le bon échange convectif-conductif d'un lit fluidisé par rapport à un lit mobile ou lit fixe, facteur 10 a minima.

Le solide doit être fluidisable. C'est-à-dire que les particules doivent être fluidisables, suivant le critère de Geldart, dans une gamme de diamètres assez bien délimitée, pas trop petites, elles fluidisent mal, et pas trop grosses, la vitesse de fluidisation augmente.

Préférentiellement, le réactif A et le produit C sont stockés dans les modules de stockage 1 et 2 à températures ambiantes par exemple 20 à 50°C comme illustrés en figure 6. Dans ce cas-là, le système comprend avantageusement, un module de préchauffage 301, 302 en entrée de chacun des réacteurs 3, 4. Le module de préchauffage 301 comprend un échangeur thermique 301 agencé sur le module de transport 10 pour l'entrée du produit C dans le réacteur 4 et le module de transport 9 pour la sortie du réactif A du réacteur 4. Le module de préchauffage 302 comprend un échangeur thermique 302 agencé sur le module de transport 7 pour l'entrée du réactif A dans le réacteur 3 et le module de transport 8 pour la sortie du produit C du réacteur 3.

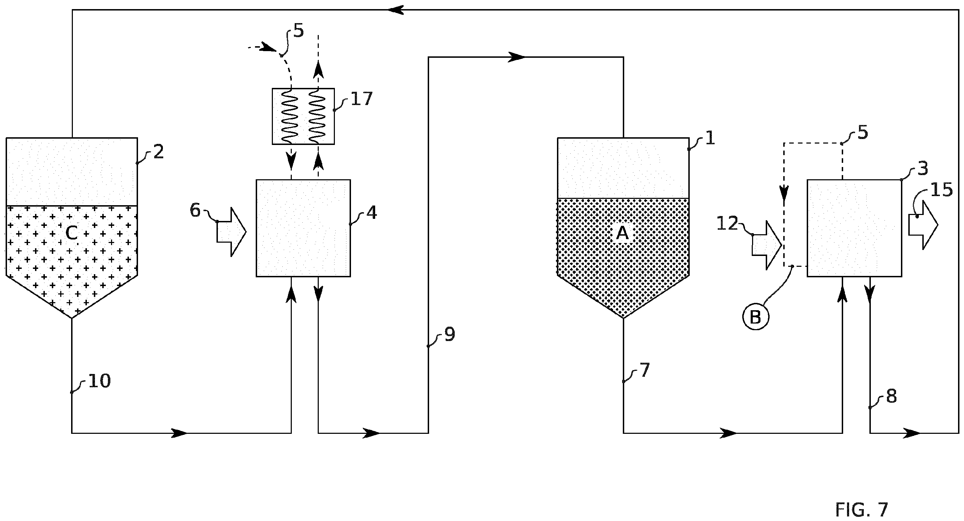

Selon une autre possibilité illustrée en figure 7, le réactif A et le produit C sont stockés dans les modules de stockage 1 et 2 en températures. C'est-à-dire que les modules de stockages 1, 2 comprennent des éléments de chauffe et de maintien de la température du produit stocké. Le système ne comprend pas de module de préchauffage 301, 302.

Avantageusement, pour une application de type plus industrielle et d'assez courte durée le mode de réalisation de stockage à chaud est préféré. Pour une application intersaisonnière pour une taille réduite, il est préférable de mettre en oeuvre le mode de réalisation par stockage à froid.

Selon un mode de réalisation, le système comprend un module de production de chaleur 6 destiné à apporter de l'énergie thermique à la réaction endothermique et en particulier au produit C. Pour les deux précédentes modes de réalisation, lit tassé mobile ou lit fluidisé, le module de production de chaleur comprend une résistance électrique chauffante. Le module de production de chaleur est agencé dans la paroi du réacteur et/ou dans la vis si elle est présente.

Selon un mode de réalisation, le système comprend un module de refroidissement du solide avant sa sortie du réacteur.

Dans le cadre d'applications de stockage intersaisonnier, la quantité de chaleur (Q) nécessaire à la dissociation du produit c'est-à-dire la réaction endothermique de déshydratation assurant le stockage de l'énergie thermique est apportée par une énergie renouvelable disponible par exemple en période estivale, préférentiellement l'énergie solaire thermique. Cela correspond à la quantité d'énergie stockée. En période hivernale, la quantité de chaleur dégagée par la réaction exothermique d'hydratation (Q) est utilisée pour satisfaire les besoins souhaités.

### Exemples

### Exemple 1 : Dimensionnement d'un lit fixe à pression atmosphérique

Un système selon l'invention comprenant un lit fixe à pression atmosphérique est illustré aux figures 1 et 2

Le réacteur 4 est confondu avec le module de stockage 1 du réactif A et le module de stockage du produit C. Préférentiellement, le réacteur de déshydratation 4 et le réacteur d'hydratation 3 sont confondus. Le réacteur 3, 4 est un réacteur à lit fixe à pression atmosphérique.

Dans cet exemple la réaction choisie est celle de l'hydratation de la chaux.

À défaut d'un modèle exact, on fait l'hypothèse que la réaction est complète dans une couche réactionnelle mince pour dimensionner un tel réacteur.

Le lit fixe est dimensionné pour effacer des pics de courte durée, pour un fonctionnement journalier.

Les hypothèses spécifiques au lit fixe sont :
Épaisseur du lit : 0.20 m
Diamètre des grains du réactif A et du produit C: 1 mm
Porosité du lit : 38%
Vitesse de l'air en entrée de lit (déshydratation): 0.15 m/s
Puissance apportée par le caloporteur au réacteur en déshydratation et puissance électrique: 1000 W (2328 W élec)
Puissance cédée à l'utilisateur : 2000 W
Température entrée gaz caloporteur en déshydratation : 450°C
Température entrée gaz caloporteur en hydratation :100°C
Pour ce type de conditions, on obtient la taille suivante du réacteur 4 :
   Diamètre interne : 0.433 m (volume utile : 30 litres)
   Masse chaux CaO : 29.5 kg (527 moles)
   Le réacteur est très compact, il est envisageable de le maintenir en température.

La durée de charge complète est environ de 16 heures et celle de décharge environ de 4 heures. Il s'agit donc avantageusement d'un stockage de type journalier tel que pour un effacement d'un pic de demande par exemple.

### Calcul de la déshydratation

Un schéma d'un système selon ce mode de réalisation de l'invention est illustré en figure 1.

L'air ambiant a une certaine humidité naturelle.

L'air a donc une pression partielle de vapeur minimale à l'entrée du réacteur. La déshydratation ne peut se produire en dessous de 320-350°C.

Le système comprend un module de circulation du gaz caloporteur comprenant un circuit de circulation du gaz caloporteur 5, un ventilateur 14. Le gaz caloporteur est de l'air ambiant permettant dans le circuit de circulation 5 au point A. Le système comprend un échangeur air/air 17 agencé sur le circuit de circulation 5 en amont et en aval du réacteur de déshydratation 4. Le système comprend avantageusement un module de production de chaleur 6 configuré pour chauffer le gaz caloporteur. Le module de production de chaleur 6 est agencé sur le circuit de circulation 5 en amont du réacteur 4.

Le gaz caloporteur est de l'air ambiant qui circule au moyen d'un ventilateur 14, le circuit de circulation du gaz caloporteur 5 est ouvert pour évacuer la vapeur produite par un module d'évacuation type cheminée. Le gaz caloporteur est préchauffé dans un échangeur 17 de récupération de chaleur par l'air en sortie du réacteur avantageusement extrait dans cheminée puis surchauffé dans un module de production de chaleur 6 telle une chauffe électrique. On suppose que l'air sortant du réacteur 4 est à l'équilibre réactionnel Teq,D de 370°C.

Le réacteur 4 comprend avantageusement 3 zones s'étendant entre l'entrée du gaz caloporteur dans le réacteur jusqu'à sa sortie en une première zone dite maille inerte présentant une température correspondant à la température du gaz caloporteur, une deuxième zone dite maille réactionnelle présentant une température comprise entre la température du gaz caloporteur et la température TeqD et une troisième zone dite maille inerte présentant une température TeqD.

Le gaz caloporteur issu du réacteur 4 contient encore de l'énergie thermique pouvant ensuite être utilisée préférentiellement par un échangeur 17 pour préchauffer l'air en amont du module de production de chaleur, éventuellement en sortie de l'échangeur 17, le gaz caloporteur peut à nouveau être utilisé pour transférer son énergie thermique de sorte à en tirer encore profit.

En régime établi, hors périodes instationnaires, le bilan masse et énergie d'un système selon l'invention à lit fixe illustré en figure 1 pour la déshydratation à 450°C, une puissance électrique de 2.33 kW et une puissance délivrée dans le lit de 1 kW sont données dans l'ordre lors de bilan masse énergie : la température du fluide caloporteur, éventuellement le pourcentage d'humidité relative, le débit d'air sec, le débit de vapeur, et la pression.
A : l'air entre dans le ventilateur 14 à 10°C - 75%HR - du débit d'air sec : 40,7kg/h; débit de vapeur 0,1925kg/h et 1,013bars
B : l'air sort du ventilateur 14 à 10°C - 75%HR - 40,7kg/h; 0,1925kg/h et 1,047bars
C : l'air sort de l'échangeur air/air 17 à 262°C - 40,7 kg/h; 0,192kg/h et 1,0421bars
D : L'air sort du chauffe air 6 à 450°C - 40,7 kg/h; 0,192kg/h et 1,0371bars
E : l'air sort du réacteur 4 à 370°C 40,7kg/h; 0,192kg/h et 1,0371bars
F: L'air ressort de l'échangeur air/air 17 à 24.8°C 40,7kg/h; 0,192kg/h et 1,013bars

Le ventilateur a une puissance de +109,9W, l'échangeur air/air +-3033W et +-500Pa, le chauffe air +2328W, 500Pa, le réacteur Wréaction est de -962W, Wsensible - 38W et DP 1413Pa.

### Calcul de l'Hydratation :

L'hydratation se fait en circuit fermé selon un schéma illustré à la figure 2.

Le système comprend un module de circulation du gaz caloporteur comprenant un circuit de circulation du gaz caloporteur 5, un ventilateur 14. Le gaz caloporteur est de l'air. Le système comprend un évaporateur produisant la vapeur agencé sur le circuit de circulation 5 en en aval du réacteur d'hydratation 3 pour récupérer l'énergie thermique de la réaction exothermique se déroulant dans le réacteur 3 et extraite par le gaz caloporteur de sorte à injecter la vapeur d'eau dans le réacteur 3. Le système comprend un module de récupération 15 d'énergie thermique comprenant un récupérateur étant un échangeur de chaleur vers l'utilisateur et par exemple une source finale.

Lorsque le réacteur d'hydratation 3 est confondu avec le réacteur de déshydratation 4. Le réacteur doit subir une désurchauffe pour amorcer l'hydratation, la chaleur est utilisée dans cette phase pour préchauffer les circuits, mettre l'évaporateur 12 en conditions et commencer l'apport vers l'utilisateur. Pendant la phase stationnaire de fonctionnement, le réacteur 3 comprend 3 zones de façon similaire à la déshydratation.

En faisant une hypothèse de couche mince réactionnelle, il vient comme bilan masse et énergie d'un dispositif à lit fixe pour l'hydratation à 300°C et une puissance délivrée à l'utilisateur de 2 kW sur la base de la figure 2:
A : l'air sort du ventilateur 14 à 100°C - 55,1 kg/h; 0.125kg/h et 1,117bars
B : l'air enrichi en vapeur d'eau est à 100°C - 55,1 kg/h; 1,820kg/h et 1,117bars
C : l'air sort du réacteur 3 à 300°C - 55,1 kg/h; 0.125kg/h et 1,110bars
D : L'air sort après l'évaporateur 12 à 224,5°C - 55,1 kg/h; 0.125kg/h et 1,105bars
E : l'air sort après le récupérateur de chaleur 15 à 100°C - 55,1 kg/h; 0.125kg/h et 1,100bars.

Le ventilateur a une puissance de +109,9W, l'évaporateur +1239 W et 500Pa, le réacteur Wréaction est de +2721W, Wsensible +519W et DP 696Pa, l'évaporateur +1239W et 500Pa et le récupérateur +2000W et 500Pa.

Dans le cas du lit fixe, l'air servant à la fois à transporter la vapeur réactive et de fluide caloporteur, il n'est pas possible de contrôler indépendant la température de réaction et la puissance de réaction. C'est un système contraint.

### Exemple 2 : dimensionnement d'un lit tasse mobile contre-courant avec l'air comme fluide caloporteur

Un système selon l'invention comprenant un lit tasse mobile contre-courant avec l'air comme fluide caloporteur est illustré aux figures 3 à 5.

Le réacteur 4 est distinct du module de stockage 1 du réactif A et du module de stockage du produit C. Le réacteur de déshydratation 4 et le réacteur d'hydratation 3 peuvent être confondus. Le réacteur d'hydratation 3 et le réacteur déshydratation 4 sont des lits tasse mobile à contre-courant.

La réaction choisie est celle de l'hydratation de la chaux.

Le gaz caloporteur est l'air.

Un schéma d'un système selon ce mode de réalisation est illustré en figure 3.

Le système comprend un module de stockage 1 d'un réactif A solide à température de 20 à 50°.

Le système comprend un module de stockage 2 d'un produit C solide à température de 20 à 50°.

Le système comprend un réacteur de déshydratation 4 et un réacteur d'hydratation 3.

Le système comprend un module de transport 7 du réactif A agencé entre le module de stockage 1 et le réacteur d'hydratation 3 destiné au transport du réactif A depuis le module de stockage 1 du réactif A vers le réacteur d'hydratation 3.

Le système comprend un module de transport 8 du produit C agencé entre le module de stockage 2 et le réacteur d'hydratation 3 destiné au transport du produit C depuis le réacteur d'hydratation 3 vers le module de stockage 1 du produit C.

Le système comprend un module de transport 9 du réactif A agencé entre le module de stockage et le réacteur de déshydratation destiné au transport du réactif A depuis le réacteur de déshydratation vers le module de stockage du réactif A.

Le système comprend un module de transport 10 du produit C agencé entre le module de stockage et le réacteur de déshydratation destiné au transport du produit C depuis le module de stockage du produit C vers le réacteur de déshydratation.

Le système comprend un module de circulation de gaz caloporteur 5.

Le système comprend un module de production de chaleur 6 agencé dans le réacteur 4. Le système comprend un module de récupération 15 de la chaleur agencé dans le réacteur 3.

On effectue un dimensionnement avec un réacteur comprenant deux vis de transport (lits mobiles) et un module de production de chaleur 6 et un module de refroidissement agencés à l'intérieur du réacteur et plus précisément interne à la vis assurant un échange direct avec le solide ou externe à la vis assurant un échange indirect à travers une paroi du réacteur pour les conditions suivantes :
Déshydratation ou charge : 3 kW
Hydratation ou décharge : 1 kW.

### Déshydratation

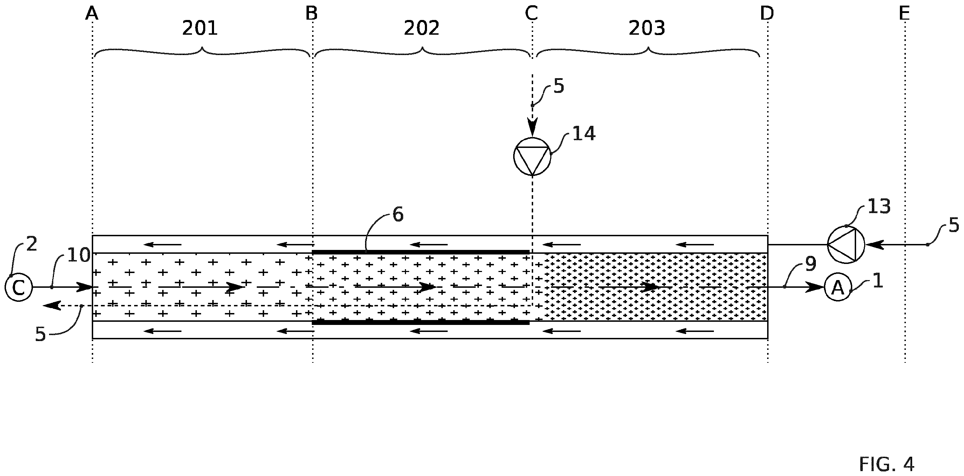

Le réacteur de déshydratation comprend une vis de déshydratation comprenant 3 zones telles qu'illustrées à la figure 4

Une première zone 201 de préchauffe du produit C, le solide Ca(OH)2 entrant, par circulation externe d'air venant de la troisième zone 203, et par circulation interne d'un mélange d'air atmosphérique et de vapeur produite la réaction de déshydratation.

Une deuxième zone 202 de déshydratation à 500°C, régulée par des cordons chauffants électriques 6 (plusieurs cordons sur la longueur pour réguler une température stable).

Une troisième zone 203 de refroidissement du réactif A, le solide CaO sortant, par air externe, pouvant être de l'air ambiant.

Les contraintes de dimensionnement sont liées à l'échange entre la paroi externe du réacteur 4 et la chaux interne. On a pris pour le dimensionnement dans tous les calculs un coefficient d'échange global de 50 W/m2/K. Un coefficient plus élevé permettrait de réduire les surfaces d'échange et donc la longueur de la vis.

Le bilan masse et énergie d'un dispositif vis pour la déshydratation à 500°C et une puissance électrique de 3 kW pour une vis de 6,49m de longueur dont une première zone de 1,72 m, une deuxième zone de 4,10m et une troisième zone e 1,67 m, un diamètre de 47mm et un taux de remplissage axial de 10%, illustré en figure 4:
Point A extrémité libre de la première zone :
   - Entrée du produit C : Ca(OH)2 à 55°C et 6,87kg/h
   - Sortie de l'air contenant de la vapeur à 1,013bars, 95°C, 1,67kg/h vapeur, 1,67kg/h air et 73%HR
   - Sortie de l'air externe échangeant avec la paroi du réacteur à 1,013bars , 138,3°C et 4,55kg/h
Point B jonction entre la première zone et la deuxième zone :
   - Produit C : Ca(OH)2 à 375°C et 6,87kg/h
   - Air contenant de la vapeur à 1,018bars, 500°C, 1,67kg/h vapeur, 1,67kg/h air
   - Air externe échangeant avec la paroi du réacteur à 1,018bars , 450°C et 4,55kg/h
Point C jonction entre la deuxième zone et la troisième zone :
   - Réactif A : CaOH à 500°C et 5,20kg/h
   - Injection d'air dans la deuxième zone du réacteur à 1,013bars, 10°C et 4,55kg/h Point D extrémité libre de la troisième zone :
   - Sortie du réactif A : CaOH à 55,6°C et 5,20kg/h
   - Entrée de l'air externe échangeant avec la paroi du réacteur à 1,023bars , 10°C et 4,55kg/h
Point E en amont d'un ventilateur de mise en circulation de l'air à 1,013bars, 10°C et 60%HR, 4,55kg/h.

La perte principale provient de l'air humide chaud évacué à la cheminée. Il serait ainsi possible de charger le système (production de chaux vive CaO) tout en apportant de la chaleur à l'utilisateur pour des besoins à identifier.

### Hydratation

Le réacteur d'hydratation 3 comprend une vis d'hydratation, on suppose que le solide, le réactif A, va s'échauffer jusqu'à 300°C puis, le produit C, se refroidir de façon symétrique. La vis comprend 2 zones.

La vapeur, le réactif B, est injectée sur toute la longueur de la vis. Le gaz caloporteur circule en paroi externe, à co-courant dans la première zone 211 et à contre-courant dans la deuxième zone 212. Le caloporteur cède ensuite sa chaleur en série à l'évaporateur 12 servant à produire la vapeur, le réactif B, puis à l'utilisateur finale, par le récupérateur 15.

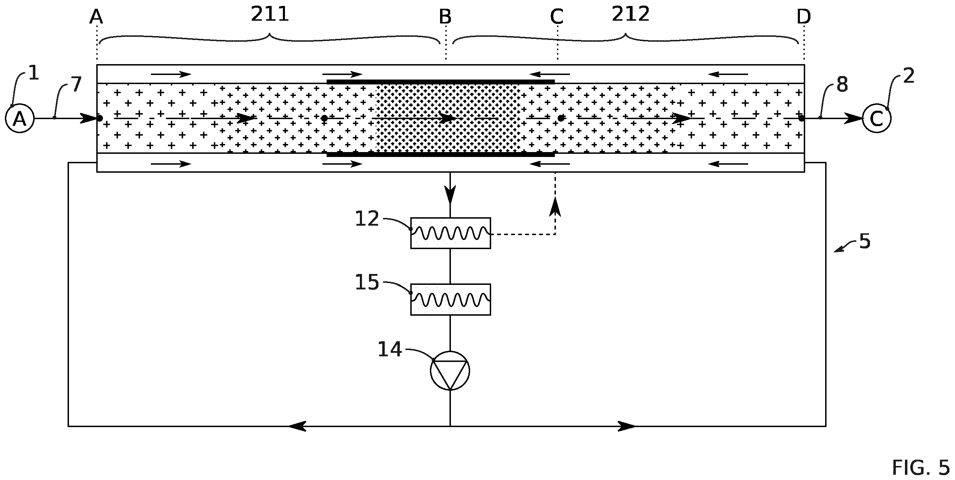

Le bilan masse et énergie d'un dispositif vis pour l'hydratation à 300°C et une puissance délivrée à l'utilisateur de 1 kW pour une vis de 7,22m de longueur dont une première zone de 3,61 m, une deuxième zone de 3,61m, un diamètre de 35mm et un taux de remplissage axial de 10%, illustré en figure 5 :
Point A extrémité libre de la première zone :
   - Entrée du réactif A : CaOH à 55,6°C et 3,53kg/h
   - Entrée de l'air externe échangeant avec la paroi du réacteur à 6bar, 40°C et 19,3kg/h
Point B jonction entre la première zone et la deuxième zone :
   - Produit C : Ca(OH)2 à 300°C et 4,10kg/h
   - Sortie d'air externe de la première zone et de la deuxième zone échangeant avec la paroi du réacteur à 5,995bars, 200°C et 38,6kg/h
Point C entrée de la vapeur, réactif B, dans la deuxième zone:
   - Vapeur à 107°C et 1,13kg/h
Point D extrémité libre de la deuxième zone :
   - Sortie du produit C : Ca(OH)2 à 55,6°C et 4,66kg/h
   - Entrée de l'air externe échangeant avec la paroi du réacteur à 6bar, 40°C et 19,3kg/h.
Point E sortie de l'air, provenant de la première zone et de la deuxième zone, de l'évaporateur fonctionnant à 1,3 bar, Tsat à 10°C, 500Pa et 820W, l'air étant à 5,990 bars, 127,9°C et 38,6kg/h.
Point F sortie de l'air provenant de l'évaporateur, le récupérateur fonctionnant à 500Pa et 100W, l'air étant à 5,985 bars, 40°C et 38,6kg/h.

L'hydratation est réalisée dans ce type de système à une température maximale de 300°C. Le débit d'air caloporteur est donc élevé en raison d'un DT moyen (160°C ici). Préférentiellement, il faudrait travailler sous pression pour avoir un diamètre équivalent relativement faible (13 mm sous 6 bars pour une vitesse de 20 m/s). À ce niveau de température un caloporteur huile est également envisageable.

Pour améliorer le contact maximal entre le réactif A et le réactif B chaux/vapeur, le brassage de la chaux peut être intensifié.

L'hydratation au début de la première zone 211 peut être améliorée en préchauffant la chaux jusqu'à 110-120°C avant d'injecter la vapeur, au moyen de l'air chaud sortant de la vis. Dans ce cas, la vis comprend une zone supplémentaire agencée à l'extrémité libre de la première zone qui est configurée pour assurer le préchauffage du réactif A : zone de préchauffe.

Que ce soit pour l'hydratation ou la déshydratation, les vis peuvent être séparées en plusieurs vis superposées.

### Bilan énergétique :

La masse de chaux vive permettant de charger 3 kW pendant 1 semaine (7*24 heures) est de 873 kg (respectivement 1154 kg de chaux éteinte), soit un peu moins de 1m3. La décharge à raison de 1 kW peut durer 247.5 heures, soit un peu plus de 10 jours.

Le ratio Energie_{end-user}/Energie_{électrique} est de 47.6%. Ce calcul n'inclut pas les coûts énergétiques mécaniques de la vis.

### Exemple 3 : dimensionnement d'un lit fluidisé avec de l'air comme fluide caloporteur

Un système selon l'invention avec un lit fluidisé avec de l'air comme fluide caloporteur est illustré aux figures 6 à9.

Dans cet exemple de dimensionnement le mode de réalisation est celui de la figure 7. Le réactif A et le produit C sont stockés dans les modules de stockage 1 et 2 en températures. C'est-à-dire que les modules de stockages 1, 2 comprennent des éléments de chauffe et de maintien de la température du produit stocké. Le système ne comprend pas de module de préchauffage 301, 302.

### Déshydratation

La déshydratation se fait en circuit ouvert, en mélange air/vapeur, ce qui permet de la réaliser à 500°C. Le temps de séjour moyen dans le réacteur est de 20 minutes ce qui doit permettre une conversion quasi complète. Le calcul est fait en première approximation pour une conversion de 100%.

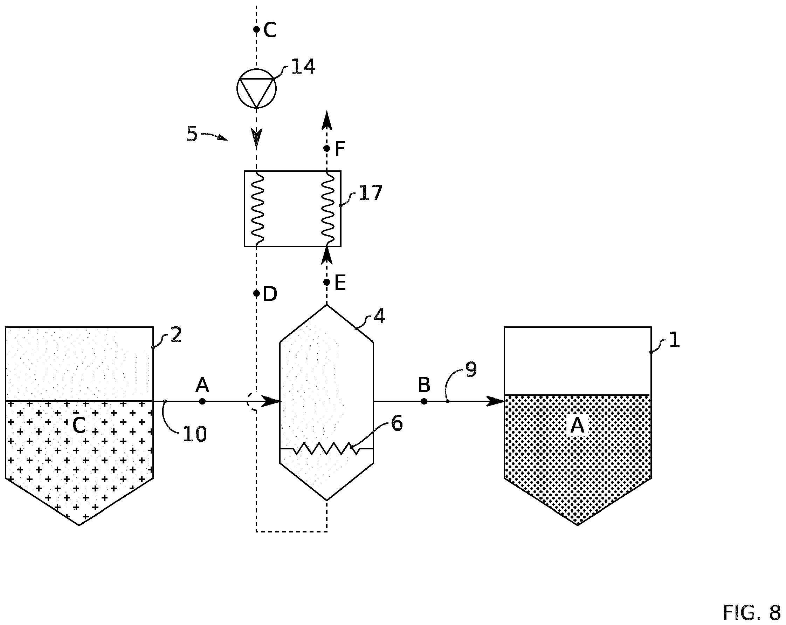

Pour cette configuration, le schéma illustré en figure 8 de la déshydratation est pour 10 kW de charge électrique. Un lit fluidisé bouillonnant pour une déshydratation à 500°C, un stockage à haute température, un diamètre de lit de 13cm et une hauteur de lit de 53cm.

Dans le module de stockage du produit C, la température du produit C est de 400°C.

Point A entrée du produit C dans le réacteur à 400°C et 23,2kg/h.

Dans le module de stockage du réactif A, la température du réactif A est de 500°C.

Point B sortie du réactif A du réacteur à 500°C et 17,6kg/h.

Point C arrivé de l'air atmosphérique dans le ventilateur à 10°C, 60 HR et 10, 8kg/h

Point D entrée de l'air dans le réacteur après passage dans l'échangeur air air à 475°C et 10,8kg/h.

Point E sortie de l'air transportant la vapeur, réactif B, du réacteur à 500°C et 16,4kg/h.

Point F sortie de l'air transportant la vapeur, réactif B, après passage dans l'échangeur air air à 194,7°C et 16,4kg/h.

La température dans le réacteur est de 500°C.

Le réacteur est chauffé par des cordons chauffants de 10000W avec un DT à la paroi du réacteur de 142°C. La paroi externe du réacteur étant à une température de 642°C.

L'échangeur air/air a une puissance de 1477W et le ventilateur de 8,8W.

La perte principale provient de l'air humide chaud évacué à la cheminée. Il serait ainsi possible de charger le système (production de chaux vive CaO) tout en apportant de la chaleur à l'utilisateur pour des besoins à identifier.

### Hydratation

L'hydratation se fait en circuit fermé à 400°C.

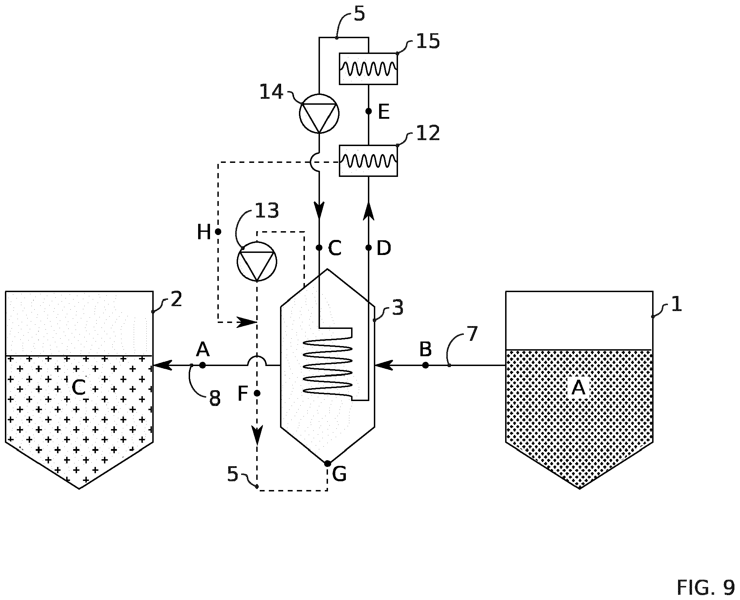

Pour cette configuration, le schéma de l'hydratation illustrée en figure 9 est pour une puissance délivrée de 20 kW. Un lit fluidisé bouillonnant pour une hydratation à 400°C, un stockage à haute température, un diamètre de lit de 20,2cm et une hauteur de lit de 89,9cm.

Dans le module de stockage du produit C, la température du produit C est de 400°C.

Point A sortie du produit C du réacteur à 400°C et 103,1kg/h.

Dans le module de stockage du réactif A, la température du réactif A est de 500°C.

Point B entrée du réactif A dans le réacteur à 500°C et 78,0kg/h.

Point C arrivée de l'air dans le ventilateur après le récupérateur à 50°C, 434,6kg/h

Point D sortie de l'air du réacteur à 350°C et 434,6kg/h.

Point E sortie de l'air de l'évaporateur à 207,3°C et 434,6kg/h kg/h.

Point F sortie de l'air transportant la vapeur, réactif B, après passage dans le réacteur 400°C et 16,4kg/h.

La température dans le réacteur est de 400°C.

Point G entrée de l'air transportant la vapeur, réactif B, dans le réacteur 222,9°C et 41,5kg/h.

Point H injection de vapeur dans le circuit de vapeur en entrée du réacteur à 107°C et 25,1kg/h.

Le réacteur comprend un échangeur interne de 38 137W de puissance. Un circuit d'air de 79mm de diamètre pour une longueur de 1,98m à 1,5 bar et 25mm de diamètre pour une longueur de 6,26m à 15 bars.

L'évaporateur a une puissance de 18137W, à 1,3 bar et une Tsat de 107°C, le récupérateur de 20000W et le ventilateur de 173,7W.

### Exemple 4 : dimensionnement d'un lit fluidisé avec de l'huile comme fluide caloporteur

Un fluide liquide comme de l'huile thermique ou de l'eau surchauffée est plus efficace en termes d'échange et permet de réduire le coût de circulation. En supposant que la température maximale de l'huile est 300°C.

L'hydratation se fait en circuit fermé à 400°C.

Pour cette configuration, le schéma de l'hydratation est pour une puissance délivrée de 20 kW. Un lit fluidisé bouillonnant pour une hydratation à 400°C, un stockage à haute température, un diamètre de lit de 20,2cm et une hauteur de lite de 89,9cm.

L'ensemble des valeurs des points A, B, F, H, G sont identique à l'exemple 3 et figure 9. Seul le circuit de circulation du caloporteur varie du fait de la nature du caloporteur : de l'huile thermique synthétique type Therminol 66 (stable jusqu'à 350°C à pression 1 bar).

Point C arrivée de l'huile dans le ventilateur après le récupérateur à 50°C, 261,1kg/h

Point D sortie de l'huile du réacteur à 300°C et 261,1kg/h.

Point E sortie de l'huile de l'évaporateur à 181,1°C et 261,1 kg/h.

Le réacteur comprend un échangeur interne de 38 137W de puissance. Un circuit d'huile de 7,1mm de diamètre pour une longueur de 17m.

L'échangeur interne réacteur est par exemple une hélice de diamètre 150 mm à 36 tours non jointifs.

### Exemple 5 : dimensionnement d'un lit tassé mobile contre-courant avec de l'eau surchauffée comme fluide caloporteur

L'eau à un fort pouvoir calorifique, ce qui compense le plus faible DT admissible, on suppose que la température est limitée à 180°C (correspondant à une pression de saturation de10 bar).

L'hydratation se fait en circuit fermé à 400°C.

Pour cette configuration, le schéma de l'hydratation est pour une puissance délivrée de 20 kW. Un lit fluidisé bouillonnant pour une hydratation à 400°C, un stockage à haute température, un diamètre de lit de 20,2cm et une hauteur de lite de 89,9cm.

L'ensemble des valeurs des points A, B, F, H, G sont identique à l'exemple 3 et figure 9. Seul le circuit de circulation du caloporteur varie du fait de la nature du caloporteur : de l'eau surchauffée.

Point C arrivée de l'eau surchauffée dans le ventilateur après le récupérateur à 50°C, 248,3kg/h et 15bars.

Point D sortie de l'eau surchauffée du réacteur à 180°C et 248,3kg/h, 15bars.

Point E sortie de l'eau surchauffée de l'évaporateur à 118,2°C et 248,3 kg/h, 15bars.

Le réacteur comprend un échangeur interne de 38 137W de puissance et un circuit d'eau de 6,8mm de diamètre pour une longueur de 12,7m.

L'échangeur interne réacteur est similaire à celui en huile.

Le rendement énergétique est de 44.5% en air et de 44.9% en eau ou huile (Eend-user / somme(E_electrique consommées)) en supposant comme précédemment que l'on efface une consommation électrique avec une conversion chaleur / électricité -100%.

À titre indicatif, un silo de 3 m³ permet de décharger 20 kW pendant 37.7 heures.

L'invention n'est pas limitée aux modes de réalisations précédemment décrits et s'étend à tous les modes de réalisation couverts par les revendications.

### LISTES DE REFERENCES

1. module de stockage du réactif A
2. module de stockage du produit C
3. réacteur d'hydratation
4. réacteur de déshydratation
5. Module de circulation de fluide caloporteur
6. Module de production de chaleur --- préférentiellement pour le chauffage du produit C
7. Module de transport du premier réactif A entre le module de stockage et le réacteur d'hydratation
8. Module de transport du produit C entre le réacteur d'hydratation et le module de stockage
9. Module de transport du premier réactif A entre le réacteur de déshydratation et le module de stockage
10. Module de transport du produit C entre le module de stockage et le réacteur de déshydratation
11. Module d'évacuation du réactif B du réacteur de déshydratation.
12. Évaporateur
13. Ventilateur
14. Ventilateur
15. Récupérateur
17. Échangeur air/air
201. Première zone
202. Deuxième zone
203. Troisième zone
211. Première zone
212. Deuxième zone
301. Module de préchauffage
302. Module de préchauffage

## Revendications

1. Système destiné au moins au déstockage d'énergie sous forme thermochimique sur la base d'une réaction réversible d'un premier réactif A et d'un deuxième réactif B pour donner un produit C et de la chaleur et comprenant
• un réacteur d'hydratation (3) configuré pour assurer la tenue d'une réaction exothermique du premier réactif A avec le deuxième réactif B pour produire le produit C et de la chaleur comprenant une phase de démarrage et une phase de maintien,
• un module de circulation (5) comprenant un circuit de circulation d'un fluide caloporteur dans le réacteur d'hydratation (3),
• un module de stockage (1) configuré pour recevoir le premier réactif A,
• un module de stockage (2) configuré pour recevoir le produit C,
le système comprend:
un module de production du deuxième réactif B en phase de maintien de la réaction exothermique, le deuxième réactif étant de la vapeur d'eau, comprenant un évaporateur (12) et une source chaude, destiné à l'évaporation de l'eau par transfert thermique depuis la chaleur produite par la réaction exothermique au profit de la production de vapeur d'eau, la source chaude étant au moins partiellement le fluide caloporteur permettant d'extraire l'énergie thermique du réacteur d'hydratation (3), le circuit de circulation du fluide caloporteur étant configuré pour assurer le transfert thermique entre le réacteur d'hydratation (3) et l'évaporateur (12)..

2. Système selon la revendication précédente destiné également au stockage d'énergie électrique issue d'énergie renouvelable sous forme thermochimique comprenant un réacteur de déshydratation (4) configuré pour assurer la tenue d'une réaction endothermique du produit C pour produire les réactifs A et B.

3. Système selon la revendication précédente comprenant un module de production de chaleur (6), destiné au chauffage du produit C, par transformation d'énergie électrique issue d'énergie renouvelable en énergie thermique.

4. Système selon l'une quelconque des deux revendications précédentes dans lequel le réacteur de déshydratation (4) est délocalisé par rapport au réacteur d'hydratation (3).

5. Système selon l'une quelconque des revendications précédentes comprenant un module d'apport d'eau ou de vapeur d'eau en phase de démarrage de la réaction exothermique.

6. Système selon l'une quelconque des revendications 2 à 5 comprenant un module de transport (9) du premier réactif A entre le réacteur de déshydratation (4) et le module de stockage (1) du premier réactif A.

7. Système selon l'une quelconque des revendications précédentes comprenant un module de transport (7) du premier réactif A entre le module de stockage (1) du premier réactif A et le réacteur d'hydratation (3) et un module de transport (8) du produit C entre le réacteur d'hydratation (3) et le module de stockage (2) du produit C, le réacteur étant un lit fluidisé ou mobile.

8. Système selon l'une quelconque des revendications 1 à 3, dans lequel le réacteur d'hydratation (4), le module de stockage (1) du premier réactif A et le module de stockage (2) du produit C sont communs, le réacteur étant un réacteur fixe.

9. Procédé destiné au moins au déstockage d'énergie sous forme thermo chimique par un système selon l'une quelconques de revendications 1 à 8 comprenant une étape de déstockage d'énergie thermique comprenant une réaction exothermique d'hydratation comprenant la mise en contact d'un réactif A avec un réactif B, dans un réacteur d'hydratation (3) pour la production d'un produit C et de chaleur, comprenant une phase de démarrage et une phase de maintien **caractérisé en ce qu'**il comprend au cours de la phase de maintien, une étape de production du réactif B étant de la vapeur d'eau produite par chauffage d'eau dans un évaporateur (12) par récupération d'une partie de la chaleur produite par la réaction exothermique, l'enthalpie de la réaction exothermique étant supérieure à 70kJ/mol.

10. Procédé selon la revendication précédente dans lequel la chaleur produite par la réaction exothermique est utilisée pour chauffer par échange thermique dans un module de récupération de chaleur (15) une source finale pour un réseau de chaleur, préférentiellement le chauffage ou la production d'eau chaude sanitaire, ou pour le chauffage ou l'eau chaude sanitaire dans l'habitat.

11. Procédé selon l'une quelconques de revendications 9 ou 10 dans lequel la réaction exothermique présente une température supérieure ou égale à 100°C, préférentiellement inférieure ou égale à 500°C.

12. Procédé destiné également au stockage d'énergie thermique par un système selon l'une quelconques de revendications 1 à 8 comprenant une étape de stockage d'énergie thermique comprenant une réaction endothermique comprenant le chauffage du produit C par un module de production de chaleur (6) par transformation d'énergie électrique renouvelable en énergie thermique, l'enthalpie de la réaction endothermique étant supérieure à 70kJ/mol.

13. Procédé selon la revendication précédente dans lequel l'étape de stockage est délocalisée.

14. Procédé selon l'une quelconques de revendications 9 à 13 dans lequel le réactif A est choisi parmi l'oxyde de calcium (CaO), l'oxyde de magnésium (MgO) ou le dibromure de calcium (CaBr2).

## Patentansprüche

1. System, das mindestens zum Rückspeichern von Energie in thermochemischer Form auf der Grundlage einer reversiblen Reaktion eines ersten Reagens A und eines zweiten Reagens B bestimmt ist, um ein Produkt C und Wärme zu ergeben, und umfassend:
• einen Hydratisierungsreaktor (3), konfiguriert, um eine exotherme Reaktion des ersten Reagens A mit dem zweiten Reagens B zu gewährleisten, um das Produkt C und Wärme zu produzieren, eine Startphase und eine Aufrechterhaltungsphase umfassend,
• ein Zirkulationsmodul (5), einen Zirkulationskreislauf eines Wärmeträgerfluids im Hydratisierungsreaktor (3) umfassend,
• ein Speichermodul (1), konfiguriert, um das erste Reagens A zu empfangen,
• ein Speichermodul (2), konfiguriert, um das Produkt C zu empfangen,
das System umfasst:
ein Modul der Produktion des zweiten Reagens B in der Phase der Aufrechterhaltung der exothermen Reaktion, wobei das zweite Reagens Wasserdampf ist, einen Verdampfer (12) und eine Heißquelle umfassend, zum Verdampfen von Wasser durch Wärmeübertragung aus der durch die exotherme Reaktion produzierten Wärme zugunsten der Wasserdampfproduktion bestimmt, wobei die Heißquelle mindestens teilweise das Wärmeträgerfluid ist, das die Extrahierung der Wärmeenergie aus dem Hydratisierungsreaktor (3) ermöglicht, wobei der Zirkulationskreislauf des Wärmeträgerfluids konfiguriert ist, um die Wärmeübertragung zwischen dem Hydratisierungsreaktor (3) und dem Verdampfer (12) zu gewährleisten.

2. System nach dem vorhergehenden Anspruch, das auch zur Speicherung von elektrischer Energie bestimmt ist, die aus erneuerbarer Energie in thermochemischer Form hervorgegangen ist, einen Dehydratisierungsreaktor (4) umfassend, konfiguriert, um eine endotherme Reaktion des Produkts C zu gewährleisten, um die Reagentien A und B zu produzieren.

3. System nach dem vorhergehenden Anspruch, ein Wärmeproduktionsmodul (6) umfassend, das zum Erhitzen des Produkts C durch Umwandlung von elektrischer Energie, die aus erneuerbarer Energie hervorgegangen ist, in Wärmeenergie bestimmt ist.

4. System nach einem der zwei vorhergehenden Ansprüche, wobei der Dehydratisierungsreaktor (4) relativ zum Hydratisierungsreaktor (3) delokalisiert ist.

5. System nach einem der vorhergehenden Ansprüche, ein Modul zum Zuführen von Wasser oder Wasserdampf in der Startphase der exothermen Reaktion umfassend.

6. System nach einem der Ansprüche 2 bis 5, ein Modul des Transports (9) des ersten Reagens A zwischen dem Dehydratisierungsreaktor (4) und dem Speichermodul (1) des ersten Reagens A umfassend.

7. System nach einem der vorhergehenden Ansprüche, ein Modul des Transports (7) des ersten Reagens A zwischen dem Speichermodul (1) des ersten Reagens A und dem Hydratisierungsreaktor (3) umfassend, und ein Modul des Transports (8) des Produkts C zwischen dem Hydratisierungsreaktor (3) und dem Speichermodul (2) des Produkts C, wobei der Reaktor ein Wirbel- oder Bewegungsbett ist.

8. System nach einem der Ansprüche 1 bis 3, wobei der Hydratisierungsreaktor (4), das Speichermodul (1) des ersten Reagens A und das Speichermodul (2) des Produkts C gemeinsam sind, wobei der Reaktor ein stationärer Reaktor ist.

9. Verfahren das mindestens zum Rückspeichern von Energie in thermochemischer Form durch ein System nach einem der Ansprüche 1 bis 8 bestimmt ist, einen Schritt zum Rückspeichern von Wärmeenergie umfassend, eine exotherme Hydratisierungsreaktion umfassend, die die Kontaktbildung eines Reagens A mit einem Reagens B in einem Hydratisierungsreaktor (3) umfasst, zur Produktion eines Produkts C und Wärme, eine Startphase und eine Aufrechterhaltungsphase umfassend, **dadurch gekennzeichnet, dass** es während der Aufrechterhaltungsphase einen Schritt der Produktion des Reagens B umfasst, das Wasserdampf ist, der durch Erhitzen von Wasser in einem Verdampfer (12) durch Rückgewinnung eines Teils der Wärme produziert wird, die durch die exotherme Reaktion produziert wird, wobei die Enthalpie der exothermen Reaktion größer als 70 kJ/mol ist.

10. Verfahren nach dem vorhergehenden Anspruch, wobei die durch die exotherme Reaktion produzierte Wärme verwendet wird, um durch Wärmeaustausch in einem Wärmerückgewinnungsmodul (15) eine Endquelle für ein Wärmenetz zu heizen, vorzugsweise die Heizung oder die Warmwasserproduktion, oder für die Heizung oder das Warmwasser im Lebensraum.

11. Verfahren nach einem der Ansprüche 9 oder 10, wobei die exotherme Reaktion eine Temperatur größer oder gleich 100°C aufweist, vorzugsweise kleiner oder gleich 500°C.

12. Verfahren, das auch zur Speicherung von Wärmeenergie durch ein System nach einem der Ansprüche 1 bis 8 bestimmt ist, einen Schritt zur Speicherung von Wärmeenergie umfassend, eine endotherme Reaktion umfassend, die das Erhitzen des Produkts C durch ein Wärmeproduktionsmodul (6) durch Umwandlung erneuerbarer elektrischer Energie in Wärmeenergie umfasst, wobei die Enthalpie der endothermen Reaktion größer als 70 kJ/mol ist.

13. Verfahren nach dem vorhergehenden Anspruch, wobei der Speicherungsschritt delokalisiert ist.

14. Verfahren nach einem der Ansprüche 9 bis 13, wobei das Reagens A aus Calciumoxid (CaO), Magnesiumoxid (MgO) oder Calciumdibromid (CaBr2) ausgewählt ist.

## Claims

1. A system intended at least for the removal of energy in thermochemical form based on a reversible reaction of a first reagent A and a second reagent B to give a product C and heat and comprising
• a hydration reactor (3) configured to ensure conducting an exothermic reaction of the first reagent A with the second reagent B to produce the product C and heat comprising a start-up phase and a maintenance phase,
• a circulation module (5) comprising a circuit for circulating a heat transfer fluid in the hydration reactor (3),
• a storage module (1) configured to receive the first reagent A,
• a storage module (2) configured to receive the product C,
the system comprises:
a module for producing the second reagent B in the phase of maintaining the exothermic reaction, the second reagent being water vapour, comprising an evaporator (12) and a hot source, intended for the evaporation of water by heat transfer from the heat produced by the exothermic reaction for the benefit of the production of water vapour, the hot source being at least partially the heat transfer fluid allowing extracting the thermal energy from the hydration reactor (3), the circuit for circulating the heat transfer fluid being configured to ensure the heat transfer between the hydration reactor (3) and the evaporator (12).

2. The system according to the preceding claim, also intended for storing electrical energy from renewable energy in thermochemical form comprising a dehydration reactor (4) configured to ensure conducting an endothermic reaction of the product C to produce the reagents A and B.

3. The system according to the preceding claim, comprising a heat producing module (6), intended to heat the product C, by converting electrical energy from renewable energy into thermal energy.

4. The system according to any one of the two preceding claims, wherein the dehydration reactor (4) is relocated relative to the hydration reactor (3).

5. The system according to any one of the preceding claims, comprising a module for supplying water or water vapour during the start-up phase of the exothermic reaction.

6. The system according to any one of claims 2 to 5, comprising a module (9) for transporting the first reagent A between the dehydration reactor (4) and the module (1) for storing the first reagent A.

7. The system according to any one of the preceding claims, comprising a module (7) for transporting the first reagent A between the module (1) for storing the first reagent A and the hydration reactor (3) and a module (8) for transporting the product C between the hydration reactor (3) and the module (2) for storing the product C, the reactor being a fluidised or moving bed.

8. The system according to any one of claims 1 to 3, wherein the hydration reactor (4), the module (1) for storing the first reagent A and the module (2) for storing the product C are common, the reactor being a stationary reactor.

9. The method intended at least for the removal of energy in thermochemical form by a system according to any one of claims 1 to 8, comprising a step of removing thermal energy comprising an exothermic hydration reaction comprising contacting a reagent A with a reagent B, in a hydration reactor (3) for producing a product C and heat, comprising a start-up phase and a maintenance phase **characterised in that** it comprises, during the maintenance phase, a step of producing the reagent B being water vapour produced by heating water in an evaporator (12) by recovering a portion of the heat produced by the exothermic reaction, the enthalpy of the exothermic reaction being greater than 70kJ/mol.

10. The method according to the preceding claim, wherein the heat produced by the exothermic reaction is used to heat, by heat exchange in a heat recovery module (15), a final source for a heat network, preferably the heating or the production of domestic hot water, or for heating or domestic hot water in the home.

11. The method according to any one of claims 9 or 10, wherein the exothermic reaction has a temperature which is greater than or equal to 100°C, preferably less than or equal to 500°C.

12. The method also intended for the storage of thermal energy by a system according to any one of claims 1 to 8, comprising a thermal energy storage step comprising an endothermic reaction comprising heating the product C by a heat producing module (6) by converting renewable electrical energy into thermal energy, the enthalpy of the endothermic reaction being greater than 70kJ/mol.

13. The method according to the preceding claim, wherein the storage step is relocated.

14. The method according to any one of claims 9 to 13, wherein the reagent A is selected from calcium oxide (CaO), magnesium oxide (MgO) or calcium dibromide (CaBr2).
